# EUROPÄISCHE PATENTSCHRIFT

(11) **EP 3 356 688 B1**
(45) Veröffentlichungstag und Bekanntmachung des Hinweises auf die Patenterteilung: **01.09.2021**
(21) Anmeldenummer: 16766523.1
(22) Anmeldetag: 12.09.2016
(51) Int. Cl.: F16B 13/08

(54) **KIPPDÜBEL**
FLOP-OVER TOGGLE BOLT
CHEVILLE À BASCULE

(30) Priorität: 29.09.2015 DE 102015116426
(43) Veröffentlichungstag der Anmeldung: 08.08.2018
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2016/071430
(87) Internationale Veröffentlichungsnummer: WO 2017/055061

(56) Entgegenhaltungen:
- WO-A2-00/47847
- DE-U1- 8 702 073
- DE-U1- 29 922 513
- FR-A1- 2 554 183
- FR-A1- 2 608 723
- GB-A- 2 102 525
- NL-C1- 1 006 746
- US-A- 3 288 014
- US-A- 4 043 245
- US-A- 4 286 497
- US-A- 4 997 327
- US-A1- 2003 118 420
- US-A1- 2006 088 399

## Beschreibung

Die Erfindung betrifft einen Kippdübel mit den Merkmalen des Oberbegriffs des Anspruchs 1.

Kippdübel (siehe z.B. Dokument US 2006/0088399 A1) werden verwendet zur Befestigung an Platten, beispielsweise Gipsplatten oder Gipskartonplatten einer Trennwand, die nur auf einer Seite zugänglich sind und deren andere Seite unzugänglich ist. Die Befestigung eines Kippdübels erfolgt durch ein in der Platte eingebrachtes und hier als Durchsteckloch bezeichnetes Durchgangsloch. Andere Befestigungen sind nicht ausgeschlossen.

Ein Kippdübel ist bekannt aus der Patentschrift DE 1 121 792. Der bekannte Kippdübel weist einen Balken mit einem Schraubenloch, das den Balken in einer Mitte radial durchsetzt, und ein mit dem Balken einstückiges Band, das biegbar und dadurch schwenkbar mit dem Balken verbunden ist, auf. Das Band ist seitlich des Schraubenlochs am Balken angeordnet und steht seitlich vom Balken ab. Durch die Schwenkbarkeit lässt sich der Balken parallel in seitliche Anlage am Band schwenken. Zur Befestigung an einer Platte wird der Balken parallel in seitliche Anlage am Band geschwenkt und so durch ein Durchsteckloch in einer Platte durchgesteckt, wobei er am Band gehalten und durch das Durchsteckloch durchgeschoben wird. Nachdem der Balken durch die Platte durchgetreten ist, wird er am Band zurückgezogen, wobei er sich querstellt und die Platte auf einer unzugänglichen Seite an zwei gegenüberliegenden Stellen eines Lochrandes des Durchstecklochs hintergreift. Auf dem Band ist eine Hülse verschiebbar angeordnet, die entlang des Bandes in Richtung des Balkens in das Durchsteckloch in der Platte geschoben wird, wobei das Band gegengehalten wird, so dass der Balken in Anlage an der unzugänglichen Seite der Platte bleibt. Eine Riffelung des Bandes hält das Band an der Hülse und den Balken in Anlage an der unzugänglichen Seite der Platte. Nach einem Abschneiden des Bandes auf einer dem Balken abgewandten Seite der Hülse lässt sich eine Schraube durch die Hülse stecken und in das Schraubenloch des Balkens einschrauben. Mit der Schraube lässt sich ein Gegenstand am Kippdübel und über diese an der Platte befestigen. Beim Einschrauben der Schraube in das Schraubenloch des Balkens wird über die Schraube eine Kraft auf den Balken ausgeübt, die den Balken von der unzugänglichen Seite der Platte abdrückt und gegen die das Band des Kippdübels den Balken halten muss.

Aufgabe der Erfindung ist, eine solche Kraft, die eine Schraube beim Einschrauben in ein Schraubenloch eines Balkens eines Kippdübels auf den Balken ausübt, zumindest zu verringern.

Diese Aufgabe wird durch die Merkmale des Anspruchs 1 gelöst. Der erfindungsgemäße Kippdübel mit den Merkmalen des Anspruchs 1 weist einen Balken mit einem Schraubenloch zum Einschrauben einer Schraube quer zum Balken auf. "Balken" bedeutet ein Element, das in einer Längsrichtung länger als quer zur Längsrichtung ist, so dass es in seiner Längsrichtung durch ein Durchsteckloch durchsteckbar ist und quergestellt zum Durchsteckloch dessen Lochrand an zwei gegenüberliegenden Stellen übergreift. Der Balken weist somit eine Länge in Richtung der Längsachse auf, die größer als die Höhe und die Breite des Balkens ist. "Quer" bedeutet insbesondere radial oder orthogonal zur Längsachse des Balkens, eine Schrägstellung in einem spitzen Winkel zu einer Radialen oder Orthogonalen ist umfasst. "Schraubenloch" meint, dass eine Schraube, die planmäßig mit dem Kippdübel verwendbar ist und mit dem Kippdübel eine Befestigungseinheit bildet, in das Schraubenloch drehend eingeschraubt werden muss, und nicht in das Schraubenloch ohne eine Drehbewegung eingeführt werden kann, so dass die Gewindeflanken der Schraube mit der Wand des Schraubenlochs in Eingriff gelangen. Das Schraubenloch kann gewindelos zu einem Einschrauben einer ihr Gegengewinde selbstschneidenden Schraube sein. Ebenso ist ein Schraubenloch mit einem Innengewinde oder mit nach innen stehenden Elementen für einen Gewindeeingriff eines Schraubengewindes möglich.

Des Weiteren weist der erfindungsgemäße Kippdübel ein Band zum Handhaben des Kippdübels bei der Befestigung auf, das seitlich des Schraubenlochs des Balkens schwenkbar am Balken angeordnet ist. Das Band kann beispielsweise mit einem Gelenk oder dgl. schwenkbar mit dem Balken verbunden sein. Vorzugsweise ist das Band einstückig mit dem Balken und beispielsweise durch Spritzgießen aus Kunststoff einstückig mit dem Balken hergestellt. Zur Schwenkbarkeit des Bandes am Balken bzw. umgekehrt des Balkens am Band ist das Band elastisch und/oder plastisch biegbar. Das Band ist so biegesteif, dass der Balken parallel zum Band an eine Seite des Bandes geschwenkt am Band gehalten und durch ein Durchsteckloch durchgeschoben werden kann. Das Band kann auch als Schaft oder Stiel des Kippdübels aufgefasst werden, der gegenüber dem Balken schwenkbar ist.

Auf dem Band ist eine Hülse mit einem Durchgangsloch verschiebbar angeordnet, das ein Schraubenloch der Hülse zum Durchschrauben einer Schraube bildet. Das Schraubenloch der Hülse fluchtet mit dem Schraubenloch des Balkens, wenn das Band, auf dem die Hülse verschiebbar ist, achsparallel zum Schraubenloch des Balkens vom Balken absteht. Dabei können das Schraubenloch der Hülse und das Schraubenloch des Balkens seitlich so weit versetzt sein, dass eine Schraube, die durch das Schraubenloch der Hülse geschraubt wird, in das Schraubenloch des Balkens "trifft". Nach einem Durchstecken des an dem Band gehaltenen Balkens durch ein Durchsteckloch und einem Rückziehen des Balkens am Band, so dass sich der Balken auf einer unzugänglichen Seite des Durchstecklochs querstellt und einen Lochrand hintergreift, wird die Hülse auf dem Band verschoben und in das Durchsteckloch gesteckt. Vorzugsweise weist die Hülse ein seitlich abstehendes Widerlager auf, das auf einer zugänglichen Seite auf einem Lochrand des Durchstecklochs aufliegt, so dass die Hülse nicht durch das Durchsteckloch durchgeschoben werden kann. Beispielsweise weist die Hülse einen Flansch oder einen Bund als Widerlager auf. Auch das Schraubenloch der Hülse verhindert, dass die Schraube durch die Hülse geschoben werden kann, die Schraube muss durch die Hülse geschraubt werden, um sie in das Schraubenloch des Balkens einschrauben zu können. Auf diese Weise vermeidet die Hülse, dass die Schraube eine (hohe) Axialkraft auf den Balken ausübt, die von der unzugänglichen Seite der Platte mit dem Durchsteckloch weggerichtet ist und gegen die der Balken beim Einschrauben der Schraube in sein Schraubenloch gehalten werden müsste.

Das Schraubenloch der Hülse kann ebenso wie das Schraubenloch des Balkens gewindelos zum Durchschrauben einer Schraube, deren Gewinde sich ein Gegengewinde selbst schneidet, sein. Auch ist ein Schraubenloch mit einem Innengewinde oder mit einem oder mehreren nach innen stehenden Elementen für einen Gewindeeingriff eines Schraubengewindes möglich.

Eine Ausgestaltung der Erfindung sieht vor, dass eine lichte Weite des Schraubenlochs des Balkens mindestens so groß wie eine lichte Weite des Schraubenlochs der Hülse ist. Die lichte Weite kann beispielsweise zwischen in Längsrichtung der Schraubenlöcher oder sonstigen nach innen stehenden Elementen in den Schraubenlöchern für einen Gewindeeingriff eines Schraubengewindes einer sich das Gewinde selbstschneidenden bzw. selbstfurchenden Schraube und/oder in Umfangsrichtung der Schraubenlöcher oder wendelförmig verlaufenden Rippen oder sonstigen nach innen stehenden Elementen in den Schraubenlöchern für einen Gewindeeingriff einer Schraube bestehen. Diese Ausgestaltung der Erfindung stellt sicher, dass eine Schraube, deren Gewindedurchmesser so groß ist, dass sie nicht durch das Schraubenloch des Balkens geschoben werden kann, sondern eingeschraubt werden muss, auch nicht durch das Schraubenloch der Hülse geschoben werden kann, sondern durch das Schraubenloch der Hülse durchgeschraubt werden muss, um sie durch die Hülse in das Schraubenloch des Balkens einschrauben zu können.

Zur Anpassung an Schrauben unterschiedlichen Gewindedurchmessers sieht eine Ausgestaltung der Erfindung ein elastisch aufweitbares Schraubenloch der Hülse vor. Beispielsweise weist die Hülse mindestens ein seitlich zum Schraubenloch federndes Element zu einem Gewindeeingriff einer durch das Schraubenloch der Hülse durchschraubbaren Schraube auf.

Eine Weiterbildung der Erfindung sieht vor, dass das federnde Element eine schräg zum Schraubenloch der Hülse verlaufende Innenfläche für den Gewindeeingriff der Schraube aufweist, die das Schraubenloch der Hülse verengt. Die schräg zum Schraubenloch verlaufende Innenfläche des seitlich zum Schraubenloch federnden Elements der Hülse kann das Schraubenloch in Richtung des Balkens oder in entgegengesetzter Richtung verengen.

Eine Ausgestaltung der Erfindung sieht vor, dass das Band eine zahnstangenartige Verzahnung und die Hülse eine Sperrklinke aufweist, die mit der Verzahnung des Bandes zusammenwirkt, so dass die Hülse nur in Richtung des Balkens entlang des Bandes verschiebbar ist, wogegen die Sperrklinke gegen eine Verschiebung der Hülse weg vom Balken sperrt. Diese Ausgestaltung der Erfindung ermöglicht ein Festspannen des Balkens mit der Hülse über das Band gegen einen Lochrand auf einer unzugänglichen Seite eines Durchstecklochs beispielsweise einer Platte.

Eine Ausgestaltung der Erfindung sieht mindestens ein nach außen an bzw. von der Hülse abstehendes Drehsicherungselement vor, das ein Mitdrehen der in ein Durchsteckloch gesteckten Hülse mit einer Schraube beim Durchschrauben der Schraube durch das Schraubenloch der Hülse vermeidet. Das Drehsicherungselement kann beispielsweise eine in Längsrichtung der Hülse verlaufende Rippe oder eine seitlich federnde Federlasche sein, die die Hülse drehfest im Durchsteckloch hält oder jedenfalls ein Drehmoment der Hülse im Durchsteckloch erhöht, so dass sich die Hülse beim Durchschrauben der Schraube nicht im Durchsteckloch dreht.

Die Erfindung wird nachfolgend anhand eines in der Zeichnung dargestellten Ausführungsbeispiels näher erläutert. Es zeigen:
- Figur 1: einen Achsschnitt eines erfindungsgemäßen Kippdübels;

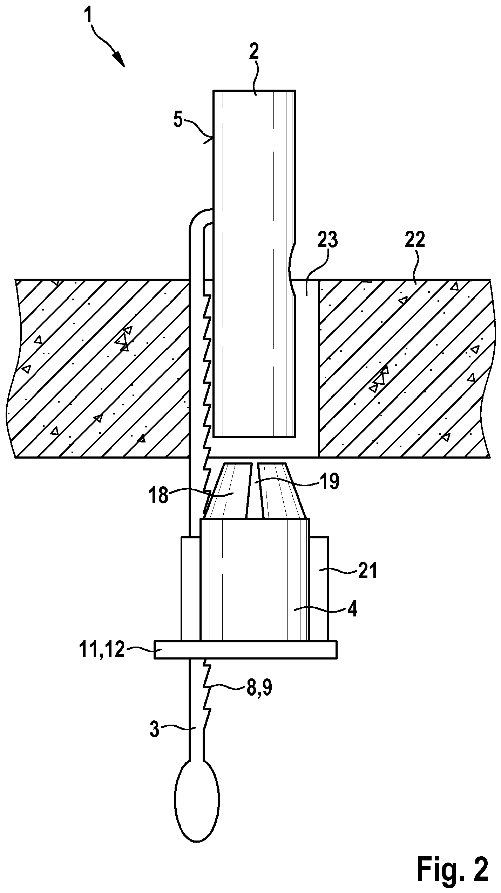

- Figur 2: den Kippdübel aus Figur 1 beim Durchstecken durch ein Durchsteckloch in Ansicht; und
- Figur 3: den Kippdübel aus Figuren 1 und 2 bei einer Befestigung am Durchsteckloch in einer Platte im Achsschnitt.

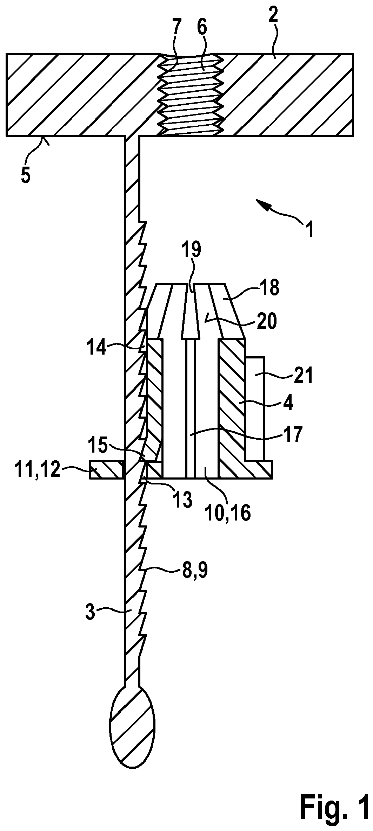

Der in Figur 1 dargestellte, erfindungsgemäße Kippdübel 1 weist einen Balken 2, ein Band 3 und eine Hülse 4 auf. Im Ausführungsbeispiel ist der Balken 2 zylinderförmig mit einer abgeflachten Seite als Anlagefläche 5, der länger als sein Durchmesser ist. Eine Zylinderform ist nicht zwingend für den Balken 2, allgemein ist der Balken 2 länger als seine Abmessungen quer zu einer Längsrichtung, so dass er in seiner Längsrichtung durch ein zylindrisches Durchsteckloch durchsteckbar ist, dessen Durchmesser kleiner als eine Länge des Balkens 2 ist, so dass der Balken 2 quergestellt zu dem Durchsteckloch an zwei gegenüberliegenden Stellen eines Lochrands aufliegt. In einer Mitte weist der Balken 2 ein Schraubenloch 6 des Balkens 2 auf, das ihn radial durchsetzt. Im Ausführungsbeispiel weist das Schraubenloch 6 des Balkens 2 ein Innengewinde 7 auf. Das Schraubenloch 6 des Balkens 2 kann allerdings auch gewindelos zum Einschrauben einer selbstschneidenden Schraube sein, deren Schraubengewinde sich ein Gegengewinde selbst in das Schraubenloch 6 des Balkens 2 schneidet. Ebenfalls denkbar sind im Schraubenloch 6 des Balkens 2 angeordnete, nach innen stehende, in Umfangsrichtung oder schraubenlinienförmig verlaufende Warzen, Laschen oder Zungen für einen Gewindeeingriff einer Schraube (nicht dargestellt).

Das Band 3 ist in einer Längsrichtung des Balkens 2 versetzt seitlich neben dem Schraubenloch 6 des Balkens 2 an der Anlagefläche 5 des Balkens 2 angeordnet. Das Band 3 ist, zumindest in einem an den Balken 2 anschließenden Abschnitt, elastisch und/oder plastisch biegbar und dadurch schwenkbar mit dem Balken 2 verbunden. Möglich ist auch eine gelenkige Verbindung des Bandes 3 mit dem Balken 2 mittels eines Gelenks (nicht dargestellt). Im Ausführungsbeispiel sind der Balken 2 und das Band 3 einstückig durch Spritzgießen aus Kunststoff hergestellt. In Figur 1 steht das Band 3 rechtwinklig und somit achsparallel zum Schraubenloch 6 des Balkens 2 von der Anlagefläche 5 des Balkens 2 ab. Der Balken 2 lässt sich um 90° schwenken, so dass seine Anlagefläche 5 am Band 3 anliegt. Das Band 3 weist eine Verzahnung 8 nach Art einer Zahnstange auf, wobei Zähne 9 der Verzahnung 8 im Ausführungsbeispiel sägezahnförmig sind. Die Verzahnung 8 befindet sich auf einer einer Achse des Schraubenlochs 6 des Balkens 2 zugewandten Seite des Bandes 3.

Die Hülse 4 weist ein Durchgangsloch 10 auf, das mit dem Schraubenloch 6 des Balkens 2 fluchtet, wenn das Band 3 rechtwinklig vom Balken 2 absteht und damit parallel zur Achse des Schraubenlochs 6 des Balkens 2 verläuft. Die Hülse 4 weist einen Flansch 11 an einem dem Balken 2 abgewandten Ende auf, das auch als seitlich von der Hülse 4 abstehendes Widerlager aufgefasst werden kann. Das Band 3 tritt durch eine Öffnung 13 im Flansch 11 durch, das den gleichen Querschnitt wie das Band 11 mit der Verzahnung 8 aufweist, so dass die Hülse 4 in Längsrichtung des Bandes 3 verschiebbar geführt ist. An einem Umfang der Hülse 4 liegt das Band 3 in einer achsparallelen Nut 14 ein, deren Querschnitt dem Querschnitt des Bandes 11 mit der Verzahnung 8 entspricht.

Die Hülse 4 weist eine radial federnde Lasche als Sperrklinke 15 auf, die mit der Verzahnung 8 des Bandes 3 nach Art einer Ratsche zusammenwirkt, so dass die Hülse 4 entlang des Bandes 3 in Richtung des Balkens 2 verschiebbar ist, wogegen die Sperrklinke 15 gegen eine Verschiebung der Hülse 4 weg vom Balken 2 sperrt.

Das Durchgangsloch 10 der Hülse 4 bildet ein Schraubenloch 16 der Hülse 4 zum Durchschrauben einer Schraube, die in das Schraubenloch 6 des Balkens 2 einschraubbar ist. Im Ausführungsbeispiel weist das Schraubenloch 16 der Hülse 4 nach innen stehende, achsparallele Rippen 17 für einen Gewindeeingriff eines Schraubengewindes einer selbstschneidenden Schraube auf, deren Schraubengewinde ein Gegengewinde selbst in die Rippen 17 und ggf. die Hülse 4 schneidet. Es ist auch möglich, dass das Schraubenloch 16 der Hülse 4 ein Innengewinde oder nach innen stehende, in einer Umfangsrichtung oder schraubenlinienförmig verlaufende Warzen, Flügel, Blecheinlegeteile oder dgl. für einen Gewindeeingriff einer Schraube aufweist (nicht dargestellt).

Zudem verjüngt sich die Hülse 4 in Richtung des Balkens 2 hohlkegelförmig mit in radialer Richtung federnden Elementen 18, die im Ausführungsbeispiel einstückig mit der Hülse 4 und durch Längsschlitze 19 in Umfangsrichtung voneinander getrennt sind, die an einem balkenseitigen Ende offen sind. Innenflächen 20 der federnden Elemente 18 verlaufen schräg zur Hülse 4 und verengen das Schraubenloch 16 der Hülse 4 in Richtung des Balkens 2. Auch die schrägen Innenflächen 20 der federnden Elemente 18 dienen einem Gewindeeingriff eines Schraubengewindes einer selbstschneidenden Schraube.

Von einem Umfang der Hülse 4 stehen achsparallel verlaufende Rippen als Drehsicherungselemente 21 nach außen ab.

Zur Befestigung des Kippdübels 1 an einer Platte 22, beispielsweise einer Gipsplatte oder einer Gipskartonplatte, wird der Balken 2 am Band 3 so verschwenkt, dass er parallel zum Band 3 ausgerichtet ist und mit seiner abgeflachten Seite, die die Anlagefläche 5 bildet, am Band 3 bzw. der Verzahnung 8 des Bandes 3 anliegt. In dieser Stellung wird der Balken 2 durch ein Durchgangsloch in der Platte 22 durchgesteckt, das hier als Durchsteckloch 23 bezeichnet wird. Dabei wird der Balken 2 am Band 3 von einer zugänglichen Seite der Platte 22 aus durch das Durchsteckloch 23 durchgeschoben. Eine gegenüberliegende Seite der Platte 22 muss nicht zugänglich sein.

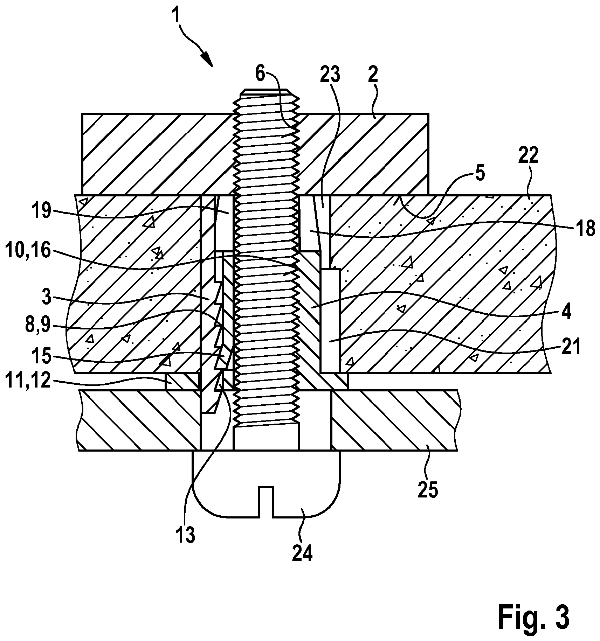

Nachdem der Balken 2 vollständig durch die Platte 22 durchgetreten ist, stellt er sich aufgrund einer Elastizität des Bandes 3 schräg oder quer und wird am Band 3 zurückgezogen, so dass der Balken 2 mit seiner Anlagefläche 5 auf der unzugänglichen Seite der Platte 22 zur Anlage kommt, wie es in Figur 3 zu sehen ist. Der Balken 2 stellt sich dabei quer zum Band 3.

Die Hülse 4 wird entlang des Bandes 3 in Richtung des Balkens 2 verschoben und in das Durchsteckloch 23 in der Platte 22 gesteckt, so dass ihr Flansch 11 an der zugänglichen Seite der Platte 22 anliegt. Beim Verschieben der Hülse 4 wird der Balken 2 am Band 3 gegengehalten, so dass er in Anlage an der unzugänglichen Seite der Platte 22 bleibt. Die mit der Verzahnung 8 des Bandes 3 zusammenwirkende Sperrklinke 15 der Hülse 4 sperrt die Hülse 4 auf dem Band 3 gegen ein Verschieben weg vom Balken 2, so dass der Balken 2 des Kippdübels 1 in Anlage an der unzugänglichen Seite der Platte 22 gehalten wird. Der an der zugänglichen Seite der Platte 22 anliegende Flansch 11 der Hülse 4 bildet dabei wie erwähnt ein Widerlager 12 für die Anlage an der Platte 22.

Anschließend wird das Band 3 auf einer dem Balken 2 abgewandten Seite der Hülse 4 abgeschnitten, abgerissen oder in anderer Weise abgetrennt. Es lässt sich nunmehr eine Schraube 24 zur Befestigung eines Gegenstands 25, durch den die Schraube 24 durchgesteckt ist, durch das Schraubenloch 16 der Hülse 4 durchschrauben und in das Schraubenloch 6 des Balkens 2 einschrauben. Während des Einschraubens ist der Balken 2 am Band 3 gehalten. Weil die Schraube 24 nicht durch die Hülse 4 geschoben werden kann, sondern durch das Schraubenloch 16 der Hülse 4 durchgeschraubt werden muss, übt sie beim Einschrauben in das Schraubenloch 6 des Balkens 2 keine Axialkraft auf den Balken 2 aus, die den Balken 2 von der unzugänglichen Seite der Platte 22 abdrückt. Das Band 3 ist dadurch weitgehend entlastet.

Die von der Hülse 4 nach außen abstehenden Rippen, die die Drehsicherungselemente 21 bilden, formen sich beim Stecken der Hülse 4 in das Durchsteckloch 23 in die Platte 22 ein und halten die Hülse 4 drehfest gegen ein Mitdrehen beim Durchschrauben der Schraube 24.

### Bezuqszeichenliste

### Kippdübel

- 1: Kippdübel
- 2: Balken
- 3: Band
- 4: Hülse
- 5: Anlagefläche
- 6: Schraubenloch des Balkens 2
- 7: Innengewinde
- 8: Verzahnung
- 9: Zahn
- 10: Durchgangsloch
- 11: Flansch
- 12: Widerlager
- 13: Öffnung
- 14: Nut
- 15: Sperrklinke
- 16: Schraubenloch der Hülse 4
- 17: Rippe
- 18: federndes Element
- 19: Längsschlitz
- 20: Innenfläche
- 21: Drehsicherungselement
- 22: Platte
- 23: Durchsteckloch
- 24: Schraube
- 25: zu befestigender Gegenstand

## Patentansprüche

1. Kippdübel mit einer Schraube (24) zur Befestigung an einem Durchsteckloch (23), mit einem Balken (2), der ein Schraubenloch (6) zum Einschrauben der Schraube (24) quer zum Balken (2) aufweist, mit einem Band (3) zum Handhaben des Kippdübels (1), das seitlich des Schraubenlochs (6) des Balkens (2) schwenkbar am Balken (2) angeordnet ist, und mit einer Hülse (4), die an dem Band (3) verschiebbar angeordnet ist und die ein Durchgangsloch (10) aufweist, das mit dem Schraubenloch (6) des Balkens (2) fluchtet, wenn das Band (3) achsparallel zum Schraubenloch (6) des Balkens (2) vom Balken (2) absteht, wobei das Durchgangsloch (10) der Hülse (4) ein Schraubenloch (16) zum Durchschrauben der Schraube (24) ist, die in das Schraubenloch (6) des Balkens (2) einschraubbar ist, wobei die Schraube (24) drehend in das Schraubenloch (6) des Balkens (2) eingeschraubt werden muss und nicht in das Schraubenloch (6) ohne eine Drehbewegung eingeführt werden kann, so dass die Gewindeflanken der Schraube (24) mit der Wand des Schraubenlochs (6) in Eingriff gelangen, **dadurch gekennzeichnet, dass** das Schraubenloch (16) der Hülse (4) verhindert, dass die Schraube (24) durch die Hülse (4) geschoben werden kann, derart, dass die Schraube (24) durch die Hülse (4) geschraubt werden muss, um sie in das Schraubenloch (6) des Balkens (2) einschrauben zu können.

2. Kippdübel nach Anspruch 1, **dadurch gekennzeichnet, dass** die Hülse (4) ein seitlich abstehendes Widerlager (12) zu einer Anlage an einem Lochrand eines Durchstecklochs (23), durch das der Balken (2) durchsteckbar ist, aufweist.

3. Kippdübel nach Anspruch 1 oder 2, **dadurch gekennzeichnet, dass** eine lichte Weite des Schraubenlochs (6) des Balkens (2) mindestens so groß wie eine lichte Weite des Schraubenlochs (16) der Hülse (4) ist.

4. Kippdübel nach einem der Ansprüche 1 bis 3, **dadurch gekennzeichnet, dass** das Schraubenloch (16) der Hülse (4) ein Innengewinde oder mindestens ein nach innen stehendes Element (17) für einen Gewindeeingriff der Schraube (24) aufweist, oder dass das Schraubenloch (16) der Hülse (4) gewindelos ist und sich die Schraube (24) ein Gegengewinde selbst schneidet.

5. Kippdübel nach einem der vorhergehenden Ansprüche, **dadurch gekennzeichnet, dass** das Schraubenloch (16) der Hülse (4) elastisch aufweitbar ist.

6. Kippdübel nach einem der vorhergehenden Ansprüche, **dadurch gekennzeichnet, dass** die Hülse (4) mindestens ein seitlich zum Schraubenloch (16) federndes Element (18) zu einem Gewindeeingriff der durch das Schraubenloch (16) der Hülse (4) durchschraubbaren Schraube (24) aufweist.

7. Kippdübel nach Anspruch 6, **dadurch gekennzeichnet, dass** das federnde Element (18) eine schräg zum Schraubenloch (16) der Hülse (4) verlaufende Innenfläche (20) für den Gewindeeingriff der Schraube (24) aufweist, die das Schraubenloch (16) der Hülse (4) verengt.

8. Kippdübel nach einem der vorhergehenden Ansprüche, **dadurch gekennzeichnet, dass** das Band (3) eine zahnstangenartige Verzahnung (8) und die Hülse (4) eine mit der Verzahnung (8) nach Art einer Ratsche zusammenwirkende Sperrklinke (15) aufweist, die gegen eine Verschiebung der Hülse (4) weg vom Balken (2) sperrt.

9. Kippdübel nach einem der vorhergehenden Ansprüche, **dadurch gekennzeichnet, dass** das Band (3) einstückig mit dem Balken (2) ist.

10. Kippdübel nach einem der vorhergehenden Ansprüche, **dadurch gekennzeichnet, dass** die Hülse (4) mindestens ein nach außen abstehendes Drehsicherungselement (21) zur Sicherung der Hülse (4) gegen Mitdrehen mit der Schraube (24) in einem Durchsteckloch (23), in das die Hülse (4) gesteckt ist, bei einem Durchschrauben der Schraube (24) durch das Schraubenloch (16) der Hülse (4), aufweist.

## Claims

1. Toggle fixing having a screw (24) for fixing to an insertion hole (23), having a crosspiece (2) which has a screw hole (6) for screwing in the screw (24) transversely with respect to the crosspiece (2), having a strip (3) for handling the toggle fixing (1), which strip is pivotally arranged on the crosspiece (2) laterally of the screw hole (6) of the crosspiece (2), and having a sleeve (4) which is displaceably arranged on the strip (3) and which has a through-hole (10) which is in alignment with the screw hole (6) of the crosspiece (2) when the strip (3) projects from the crosspiece (2) axially parallel to the screw hole (6) of the crosspiece (2), the through-hole (10) of the sleeve (4) being a screw hole (16) for screwing through the screw (24) that is arranged to be screwed into the screw hole (6) of the crosspiece (2), wherein the screw (24) needs to be screwed into the screw hole (6) of the crosspiece (2) by rotation and cannot be introduced into the screw hole (6) without a rotational movement, so that the thread flanks of the screw (24) enter into engagement with the wall of the screw hole (6), **characterised in that** the screw hole (16) of the sleeve (4) prevents the screw (24) from being able to be pushed through the sleeve (4), in such a way that the screw (24) must be screwed through the sleeve (4) in order that it can be screwed into the screw hole (6) of the crosspiece (2).

2. Toggle fixing according to claim 1, **characterised in that** the sleeve (4) has a laterally projecting counter-bearing (12) for contact with a rim of an insertion hole (23) through which the crosspiece (2) is arranged to be inserted.

3. Toggle fixing according to claim 1 or 2, **characterised in that** an inside width of the screw hole (6) of the crosspiece (2) is at least as large as an inside width of the screw hole (16) of the sleeve (4).

4. Toggle fixing according to any one of claims 1 to 3, **characterised in that** the screw hole (16) of the sleeve (4) has an internal thread or at least one inward-facing element (17) for threaded engagement of the screw (24); or the screw hole (16) of the sleeve (4) is threadless and the screw (24) itself cuts a counterthread.

5. Toggle fixing according to any one of the preceding claims, **characterised in that** the screw hole (16) of the sleeve (4) is resiliently expandable.

6. Toggle fixing according to any one of the preceding claims, **characterised in that** the sleeve (4) has at least one element (18) that is resilient laterally with respect to the screw hole (16) for threaded engagement of the screw (24) that is arranged to be screwed through the screw hole (16) of the sleeve (4).

7. Toggle fixing according to claim 6, **characterised in that** the resilient element (18) has for threaded engagement of the screw (24) an inner surface (20) running obliquely with respect to the screw hole (16) of the sleeve (4), which inner surface narrows the screw hole (16) of the sleeve (4).

8. Toggle fixing according to any one of the preceding claims, **characterised in that** the strip (3) has a rack-like toothing (8) and the sleeve (4) has a locking catch (15) which co-operates with the toothing (8) in the manner of a ratchet and which prevents displacement of the sleeve (4) away from the crosspiece (2).

9. Toggle fixing according to any one of the preceding claims, **characterised in that** the strip (3) is in one piece with the crosspiece (2).

10. Toggle fixing according to any one of the preceding claims, **characterised in that** the sleeve (4) has at least one outwardly projecting anti-rotation element (21) for securing the sleeve (4) against rotation with the screw (24) in an insertion hole (23), into which the sleeve (4) has been inserted, when the screw (24) is being screwed through the screw hole (16) of the sleeve (4).

## Revendications

1. Cheville à bascule munie d'une vis (24) pour la fixation à un trou traversant (23), munie d'une barre (2), qui comprend un trou de vis (6) pour le vissage de la vis (24) perpendiculairement à la barre (2), munie d'une bande (3) pour la manipulation de la cheville à bascule (1), qui est agencée à côté du trou de vis (6) de la barre (2) de manière pivotante sur la barre (2), et munie d'une douille (4), qui est agencée de manière coulissante sur la bande (3) et qui comprend un trou de passage (10), qui est aligné avec le trou de vis (6) de la barre (2) lorsque la bande (3) s'éloigne de la barre (2) parallèlement à l'axe du trou de vis (6) de la barre (2), le trou de passage (10) de la douille (4) étant un trou de vis (16) pour le vissage de la vis (24), qui peut être vissée dans le trou de vis (6) de la barre (2), la vis (24) devant être vissée de manière rotative dans le trou de vis (6) de la barre (2) et ne pouvant pas être insérée dans le trou de vis (6) sans mouvement de rotation, de telle sorte que les flancs de filetage de la vis (24) viennent en prise avec la paroi du trou de vis (6), **caractérisée en ce que** le trou de vis (16) de la douille (4) empêche la vis (24) d'être poussée à travers la douille (4), de telle sorte que la vis (24) doit être vissée à travers la douille (4) afin de pouvoir être vissée dans le trou de vis (6) de la barre (2).

2. Cheville à bascule selon la revendication 1, **caractérisée en ce que** la douille (4) comprend un contre-appui (12) dépassant latéralement pour une application sur un bord de trou d'un trou traversant (23), à travers lequel la barre (2) peut passer.

3. Cheville à bascule selon la revendication 1 ou 2, **caractérisée en ce qu'**une largeur intérieure du trou de vis (6) de la barre (2) est au moins aussi grande qu'une largeur intérieure du trou de vis (16) de la douille (4).

4. Cheville à bascule selon l'une quelconque des revendications 1 à 3, **caractérisée en ce que** le trou de vis (16) de la douille (4) comprend un filetage intérieur ou au moins un élément (17) orienté vers l'intérieur pour venir en prise avec le filetage de la vis (24), ou **en ce que** le trou de vis (16) de la douille (4) est dépourvu de filetage et la vis (24) coupe elle-même un contre-filetage.

5. Cheville à bascule selon l'une quelconque des revendications précédentes, **caractérisée en ce que** le trou de vis (16) de la douille (4) peut être élargi élastiquement.

6. Cheville à bascule selon l'une quelconque des revendications précédentes, **caractérisée en ce que** la douille (4) comprend au moins un élément élastique (18) à côté du trou de vis (16) pour venir en prise avec le filetage de la vis (24) pouvant être vissée à travers le trou de vis (16) de la douille (4).

7. Cheville à bascule selon la revendication 6, **caractérisée en ce que** l'élément élastique (18) comprend une surface intérieure (20) s'étendant en biais par rapport au trou de vis (16) de la douille (4), pour venir en prise avec le filetage de la vis (24), qui rétrécit le trou de vis (16) de la douille (4) .

8. Cheville à bascule selon l'une quelconque des revendications précédentes, **caractérisée en ce que** la bande (3) comprend une denture (8) en forme de crémaillère et la douille (4) comprend un cliquet d'arrêt (15) coopérant avec la denture (8) à la manière d'un rochet, qui bloque un coulissement de la douille (4) à distance de la barre (2).

9. Cheville à bascule selon l'une quelconque des revendications précédentes, **caractérisée en ce que** la bande (3) est d'un seul tenant avec la barre (2).

10. Cheville à bascule selon l'une quelconque des revendications précédentes, **caractérisée en ce que** la douille (4) comprend au moins un élément de blocage en rotation (21) dépassant vers l'extérieur pour le blocage de la douille (4) contre une rotation avec la vis (24) dans un trou traversant (23) dans lequel la douille (4) est enfichée lors d'un vissage de la vis (24) à travers le trou de vis (16) de la douille (4).
